# EUROPEAN PATENT APPLICATION

(11) **EP 4 826 693 A2**
(43) Date of publication of application: **21.10.2026**
(21) Application number: 26202997.8
(22) Date of filing: 30.06.2022
(51) Int. Cl.: G08B 21/00

(54) **SCAFFOLDING SAFETY SENSOR SYSTEM AND METHOD**

(30) Priority: 06.07.2021 SE 2150892
(62) Document number(s) of the earlier application(s) in accordance with Art. 76 EPC: 22737472.5 / 4 367 345
(71) Applicant: Scaffsense AB, 691 38 Karlskoga (SE)
(72) Inventor: EDMAN, Magnus, 691 48 Karlskoga (SE); WALLIN, Ragnar, 124 54 Bandhagen (SE); WALANDER, Lars, 652 16 Karlstad (SE)
(74) Representative: Bjerkén Hynell KB

(57) **Abstract**

In accordance with one or more embodiments herein, a system 100 for monitoring the safety of a scaffold 300 is provided. The system 100 comprises: a plurality of inertial sensor units 110, each inertial sensor unit 110 being attached to the scaffold 300 substantially straight outside a wall mounting arrangement 340 of the scaffold 300; a signal receiving unit 200, arranged to receive signals wirelessly from the plurality of inertial sensor units 110; and at least one processing device 120, arranged to determine whether a specific wall mounting arrangement 340 is loose, based at least on signals received from the inertial sensor unit 110 that is attached to the scaffold 300 substantially straight outside said specific wall mounting arrangement 340.

## Description

### TECHNICAL FIELD

The present disclosure relates generally to a system and method for monitoring the safety of a scaffold.

### BACKGROUND

Scaffolds may be exposed to severe weather conditions in the form of e.g. strong winds, ice, or snow. In order to reduce the risk of a scaffold collapsing, or people or parts falling down, it is important that all parts of the scaffold are tightly secured together, and that the scaffold is secured to a wall. However, scaffold fastenings tend to loosen over time, due to vibrations in the scaffold.

DK201700356 describes a monitoring system for scaffold constructions that uses accelerometers and gyroscopes connected to the scaffold to detect anomalies such as unauthorized activity on the scaffold, or the gradual loosening of fastenings. It is proposed to mount inertial measurement units e.g. on the vertical beams between two sections, in order to detect motion on different floors.

### PROBLEMS WITH THE PRIOR ART

In the scaffold monitoring system described in DK201700356, it is necessary to use a gyroscope together with an accelerometer in order to detect motion. This is because the sensors are placed to enable detection of motion anywhere on the scaffolding with very few sensors. Since gyroscopes are not the cheapest of sensors, the sensor units described in DK201700356 may become quite expensive, even though the sensors are mounted to cover large areas. Also, the monitoring system described in DK201700356 will not be able to tell exactly where the motion is located, and what causes it.

There is thus a need for improved monitoring of scaffold safety.

### SUMMARY

The above described problem is addressed by the claimed system for monitoring the safety of a scaffold. The system may comprise: a plurality of inertial sensor units, each inertial sensor unit being attached to the scaffold substantially straight outside a wall mounting arrangement of the scaffold; a signal receiving unit, arranged to receive signals wirelessly from the plurality of inertial sensor units; and at least one processing device, arranged to determine whether a specific wall mounting arrangement is loose, based at least on signals received from the inertial sensor unit that is attached to the scaffold substantially straight outside said specific wall mounting arrangement.

The above described problem is further addressed by the claimed method for monitoring the safety of a scaffold. The method may comprise: attaching each of a plurality of inertial sensor units to the scaffold substantially straight outside a wall mounting arrangement of the scaffold; and determining, based at least on signals received from the inertial sensor unit that is attached to the scaffold substantially straight outside a specific wall mounting arrangement, whether said specific wall mounting arrangement is loose.

This enables a determination of exactly which wall mounting arrangement that is loose, using inertial sensor units that may comprise no other sensors than accelerometers. However, one or more inertial sensor units may also comprise further sensors, such as e.g. gyroscopes.

In embodiments, the system is arranged to be self-calibrating, using machine learning based on historical data received from the plurality of inertial sensor units. In this way, the system may automatically determine when there are deviations from the normal operation.

In embodiments, the inertial sensor units are attached to inner vertical posts and/or outer vertical posts the of the scaffold. This is a convenient way of attaching the inertial sensor units substantially straight outside the wall mounting arrangements of the scaffold.

In embodiments, for each wall mounting arrangement of the scaffold, an inertial sensor unit is attached to the scaffold substantially straight outside said wall mounting arrangement. This facilitates the determination of exactly which specific wall mounting arrangement that is loose.

In embodiments, the inertial sensor units comprise accelerometers.

In embodiments, the inertial sensor units comprise alerting means, such as e.g. LED:s.

In embodiments, the signal receiving unit comprises alerting means, such as e.g. LED:s and/or audio emitters.

In embodiments, the signal receiving unit is arranged to communicate with at least one user device. This enables the sending of alerts to one or more persons responsible for the scaffold.

In embodiments, the system also comprises at least one wind speed sensor. In this way, the determination of whether a specific wall mounting arrangement is loose may be based also on the signals received from said at least one wind speed sensor. This ensures that the signal analysis takes the wind excitation of the scaffold into account.

The definition that the inertial sensor unit is attached to the scaffold "substantially straight outside" a wall mounting arrangement means that the inertial sensor unit is attached to the scaffold at substantially the horizontal level of the wall mounting arrangement (this also covers locations just above or just below the horizontal level of the wall mounting arrangement), in a direction substantially perpendicular to a wall to which the wall mounting arrangement is anchored (this also covers locations just to either side of the exact perpendicular direction). The inertial sensor unit must however be attached to the scaffold much closer to one wall mounting arrangement than to all other wall mounting arrangements, so that it is clear which wall mounting arrangement the inertial sensor unit is associated with.

The scope of the invention is defined by the claims, which are incorporated into this section by reference. A more complete understanding of embodiments of the invention will be afforded to those skilled in the art, as well as a realization of additional advantages thereof, by a consideration of the following detailed description of one or more embodiments. Reference will be made to the appended sheets of drawings that will first be described briefly.

### BRIEF DESCRIPTION OF THE DRAWINGS

Fig. 1 schematically illustrates a system for monitoring the safety of a scaffold, in accordance with one or more embodiments described herein.
Fig. 2 schematically illustrates a scaffold, in accordance with one or more embodiments described herein.
Fig. 3 schematically illustrates a part of a scaffold, in accordance with one or more embodiments described herein.
Fig. 4 schematically illustrates an embodiment of an inertial sensor unit, in accordance with one or more embodiments described herein.
Fig. 5a is an example of the variability of the acceleration in three axes as measured by inertial sensor units.
Fig. 5b illustrates the acceleration in in the direction perpendicular to the wall as measured by an inertial sensor unit.
Fig. 6 schematically illustrates a method for monitoring the safety of a scaffold, in accordance with one or more embodiments described herein.

Embodiments of the present disclosure and their advantages are best understood by referring to the detailed description that follows. It should be appreciated that like reference numerals are used to identify like elements illustrated in one or more of the figures.

### DETAILED DESCRIPTION

Prior art systems for scaffold monitoring, such as the monitoring system described in DK201700356, require the use of gyroscopes, but still cannot provide information about what exactly causes the scaffold motion. The claimed invention does not require the use of gyroscopes to be able to detect motion of the scaffold. Further, since each sensor is associated with a specific wall mounting arrangement, the system will be able to determine exactly which wall mounting arrangement that is loose - this would not be possible with the prior art systems. Embodiments of the disclosed solution are presented in more detail in connection with the figures.

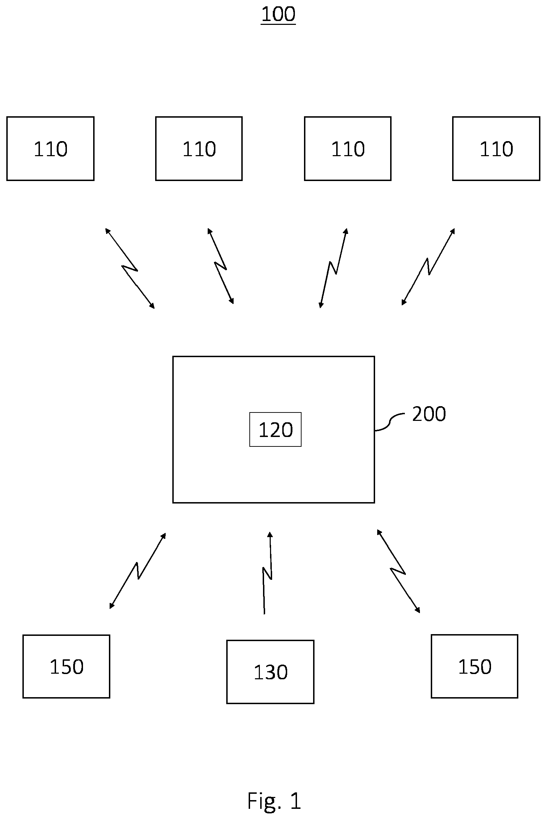

Fig. 1 schematically illustrates a system 100 for monitoring the safety of a scaffold. The system 100 comprises a plurality of inertial sensor units 110, which may e.g. comprise accelerometers. The system may also comprise one or more further sensors, such as e.g. a wind speed sensor 130. The system 100 also comprises a signal receiving unit 200, which is arranged to receive signals wirelessly from the plurality of inertial sensor units 110 (and the optional further sensors 130). The wireless communication between the inertial sensor units 110 and the signal receiving unit 200 may be any suitable type of wireless communication, such as e.g. Bluetooth, Wi-Fi, or LoRaWAN. If a wireless communication type that has a long range is used, it may be possible to use only one signal receiving unit 200 for a whole scaffold, even if the scaffold is large, and builds around the corners of a house. However, there may also be more than one signal receiving unit 200 in the system 100, if this is necessary. It may also be possible to use one or more relay units to relay the signal to the signal receiving unit 200.

In order to determine whether the scaffold is safe, a processing device 120 analyses the signals received from the inertial sensor units 110 (and the optional further sensors 130). The processing device 120 may be arranged in the signal receiving unit 200, but it may also be arranged in a remote server, preferably accessible through the internet (e.g. a cloud server). There may also be processing devices 120 in the inertial sensor units 110. The system may thus comprise more than one processing device 120, where one is arranged in the signal receiving unit 200 and one or more others may be arranged in a remote server, and/or in the inertial sensor units 110. If there are processing devices 120 in the inertial sensor units 110, initial processing make take place there, in order to determine whether any sensor data needs to be transferred to the signal receiving unit 200. Since continuous transfer of sensor data consumes battery power, it may be more efficient to process the sensor data locally in the inertial sensor units 110, and only transfer signals to the signal receiving unit 200 if there is a need for this.

The signal receiving unit 200 is preferably arranged to communicate with at least one user device 150. The user device 150 may e.g. be a mobile device, such as e.g. a smartphone, a tablet, or a laptop. The communication may take place via a physical cable, via the mobile communication network, or via any other type of wireless communication supported by the user device, such as e.g. Bluetooth or Wi-Fi. The signal receiving unit 200 may comprise a computer that comprises input means and a display, but the signal receiving unit 200 may also be a device arranged to be controlled entirely via an application in the user device 150. The signal receiving unit 200 may comprise one or more alerting means, such as e.g. LED:s and/or audio emitters. It may be battery operated for easier placement, but preferably also comprises a power cord for connection to the electricity network.

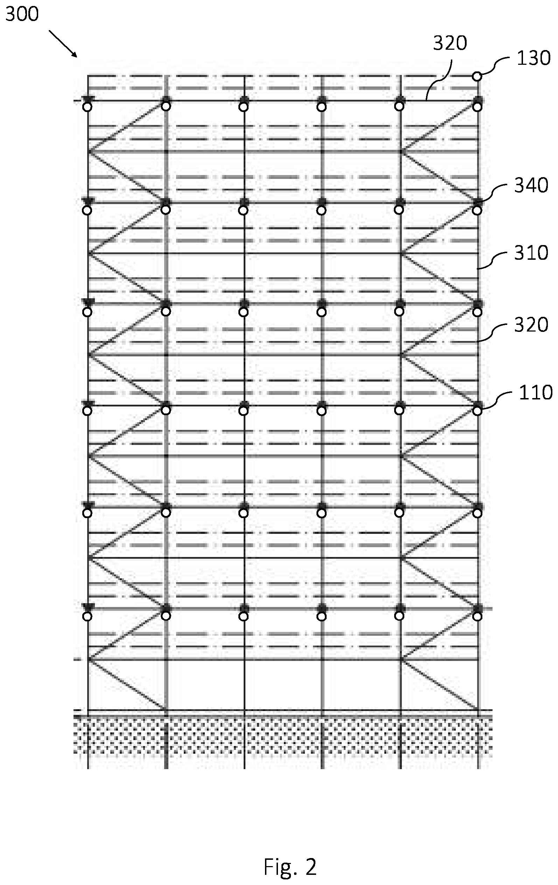

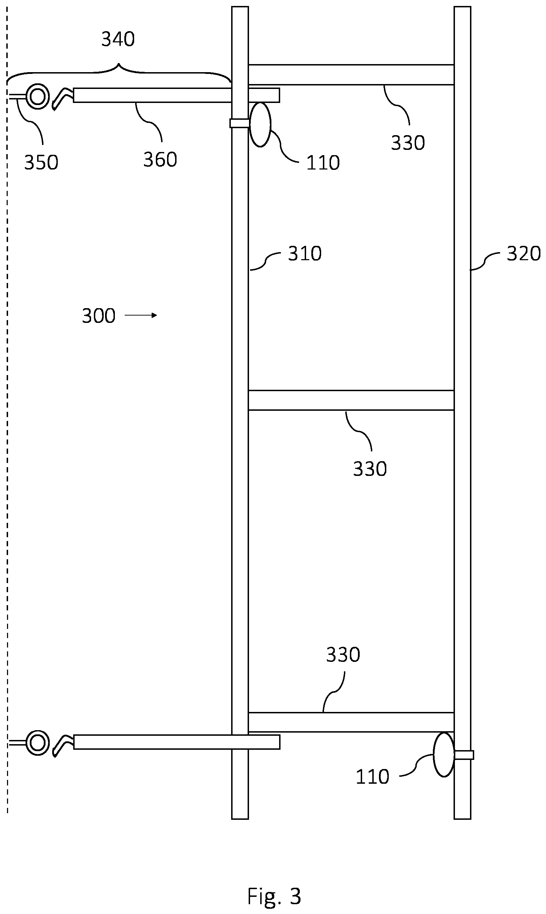

Fig. 2 schematically illustrates a scaffold 300, and Fig. 3 schematically illustrates a part of a scaffold 300. The scaffold 300 comprises vertical posts 310, 320 and horizontal floor units 330. In order for the scaffold 300 to stand firmly against a wall, it needs to be attached to the wall using wall mounting arrangements 340. There are often requirements as to the number and spacing of such wall mounting arrangements 340. The scaffold 300 illustrated in Fig. 2 e.g. has a wall mounting arrangement 340 attached to each inner vertical post 310, for every second floor.

The wall mounting arrangement 340 illustrated in Fig. 3 is a ring lock arrangement comprising a wall tie bar 360, attached to the inner vertical post 310 of the scaffold 300, and a wall mounted ring 350. Any type of wall mounting arrangement 340 may however be used, such as e.g. a bar directly screwed to the wall.

There is preferably, for each wall mounting arrangement 340, an inertial sensor unit 110 attached to the scaffold 300. In order to be able to monitor a particular wall mounting arrangement 340, the inertial sensor unit 110 should be arranged substantially straight outside the wall mounting arrangement 340, in a direction perpendicular to a wall to which the wall mounting arrangement 340 is anchored. The inertial sensor unit 110 is preferably attached to a vertical post of the scaffold 300, either the inner vertical post 310 or the outer vertical post 320. There may also be one or more further sensors, such as e.g. a wind speed sensor 130, attached to the scaffold 300.

As illustrated in Fig. 3, it is often difficult to attach the inertial sensor unit 110 exactly straight outside the wall mounting arrangement 340, at least if the inertial sensor unit 110 is to be attached to the inner vertical post 310, since the wall mounting arrangement 340 is normally attached to the inner vertical post 310 exactly straight outside the wall mounting arrangement 340. The inertial sensor unit 110 thus often needs to be attached to the inner vertical post 310 just above or below the attachment point for the wall mounting arrangement 340, as illustrated in Fig. 3. This is encompassed in the definition "substantially straight outside the wall mounting arrangement 340". The definition that the inertial sensor unit 110 is attached to the scaffold "substantially straight outside" the wall mounting arrangement 340 thus means that the inertial sensor unit 110 is attached to the scaffold 300 at substantially the horizontal level of the wall mounting arrangement 340 (this also covers locations just above or just below the horizontal level of the wall mounting arrangement 340), in a direction substantially perpendicular to a wall to which the wall mounting arrangement 340 is anchored (this also covers locations just to either side of the exact perpendicular direction). The inertial sensor unit 110 must however be attached to the scaffold 300 much closer to one wall mounting arrangement 340 than to all other wall mounting arrangements 340, so that it is clear which wall mounting arrangement 340 the inertial sensor unit 110 is associated with.

In order to use the system 100 to determine whether a specific wall mounting arrangement 340 is loose, it is important that the system knows exactly which inertial sensor unit 110 that is associated with each wall mounting arrangement 340. The inertial sensor units 110 therefore preferably have ID numbers, that are entered into a database associated with the scaffold 300 during initiation of the system 100. This entering may be done manually, using a user interface accessible e.g. via a user device 150 that communicates with the signal receiving unit 200. There may be scannable codes, such as bar codes or QR codes, on the inertial sensor units 110, to facilitate initiation of the system 100. Alternatively, RFID tags may be used. One or more positioning systems (e.g. GPS), and/or altimeters, may also be used for positioning of the inertial sensor units 110.

It is however also possible to implement automatic initiation of the system 100. If it is possible to vary the strength of the signal for the communication between the inertial sensor units 110 and the signal receiving unit 200, this signal variation may be used to automatically make a map of the location of the different inertial sensor units 110. Alternatively, the time it takes for the signals to reach the signal receiving unit 200 could be used. If the inertial sensor units 110 are able to communicate directly with each other, their internal position pattern could also be determined in this way.

If the entire scaffold construction is very large, it may be suitable to monitor the safety of the scaffold construction using a number of different systems 100, where each system 100 monitors the safety of a scaffold 300 that is a part of the whole scaffold construction. The systems 100 may then be arranged to communicate with each other, but they may also be entirely separate from each other.

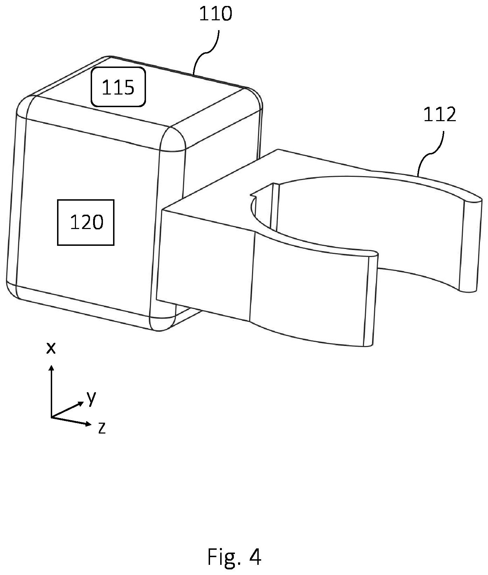

Fig. 4 schematically illustrates an embodiment of an inertial sensor unit 110, arranged with fastening means 112 for fastening of the inertial sensor unit 110 to the scaffold 300. The inertial sensor unit 110 may comprise no other sensors than an accelerometer, since this is enough to provide the desired functionality. However, the inertial sensor unit 110 may also comprise one or more further sensors, such as e.g. a gyroscope. The system 100 may also comprise one or more environmental sensors, such as e.g. a wind speed sensor 130. Such one or more environmental sensors may be arranged together with one or more inertial sensor units 110, but they may also be arranged separately. The inertial sensor unit 110 may also comprise a processing device 120.

The inertial sensor units 110 may be arranged to simply send data to the signal receiving unit 200. However, the inertial sensor units 110 may also be provided with two-way communication, so that the signal receiving unit 200 may send instructions to an inertial sensor unit 110. The inertial sensor unit 110 illustrated in Fig. 4 is also provided with alerting means 115, such as e.g. a LED. In this way, the inertial sensor unit 110 that is located substantially straight outside a wall mounting 340 arrangement that is loose may flash its LED to indicate the location of the loose wall mounting 340 arrangement. If there is local signal processing in the inertial sensor unit 110, the processing device 120 in the inertial sensor unit 110 may determine that the associated wall mounting 340 arrangement is loose, and start flashing its LED. However, if there is two-way communication, the signal receiving unit 200 may also instruct the relevant inertial sensor unit 110 to flash its LED. The inertial sensor units 110 are preferably battery operated.

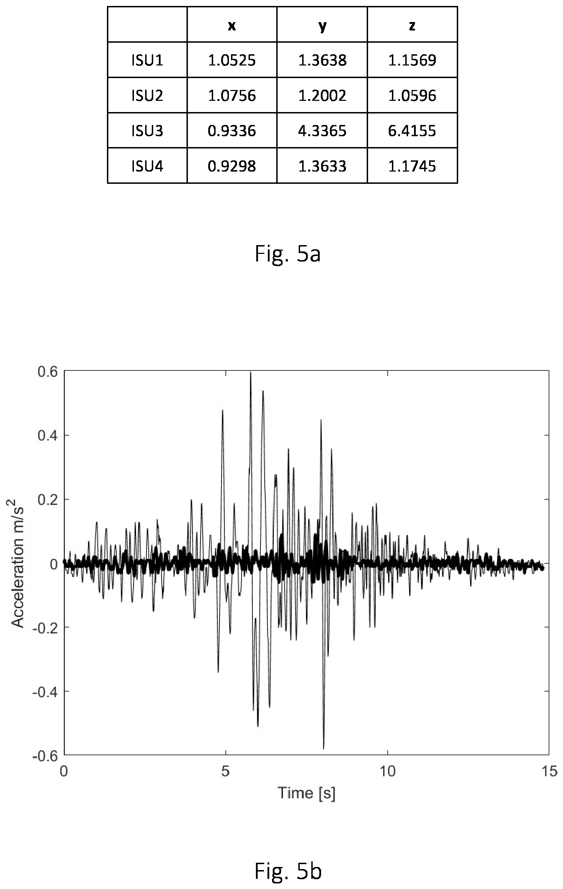

Fig. 5a is an example of the variability of the acceleration in three axes as measured by an inertial sensor unit ISU3 located substantially straight outside a wall mounting arrangement 340 that is loose, as compared with the variability of the acceleration in three axes as measured by neighboring inertial sensor units ISU1, ISU2 and ISU4, located outside wall mounting arrangements 340 that are not loose. The scaffold 300 has in this measurement been subjected to a person walking on the floor below the inertial sensor unit ISU3, where the inertial sensor unit ISU2 is located. The inertial sensor units ISU1-ISU4 have been mounted as illustrated in Fig. 4, so that the x direction is up/down, the y direction is sideways, and the z direction is perpendicular to the wall.

As illustrated in Fig. 5a, there is a clear increase in variability in the acceleration for ISU3 in the direction perpendicular to the wall (the z direction), caused by the wall mounting arrangement 340 being loose, especially compared to the acceleration in the x direction. This is illustrated also in Fig. 5b, that illustrates the acceleration in in the direction perpendicular to the wall (the z direction) in ISU3. The thick curve illustrates the acceleration when none of the wall mounting arrangements 340 are loose, and the thin curve illustrates the acceleration when the wall mounting arrangement 340 associated with ISU3 is loose.

There are a number of different options for processing the signals from the inertial sensor units 110 in order to determine whether a specific wall mounting arrangement 340 is loose. For example, the ratio between the variability in the z direction and the variability in the x direction for the acceleration measured by an inertial sensor unit 110 may be used. If this ratio increases beyond a predetermined threshold, it is likely that the wall mounting arrangement 340 associated with the inertial sensor unit 110 is loose. Another option is to analyze the frequency content, e.g. using FFT (Fast Fourier Transform) analysis. If a wall mounting arrangement 340 is loose, the frequency of the acceleration signals measured by the inertial sensor unit 110 is likely to change.

In order to use this type of signal processing, it is advantageous if it can be ensured that all inertial sensor units 110 are mounted so that they are aligned with the coordinate system used. This may be ensured e.g. by an adapted design of the fastening means 112 used to attach the inertial sensor units 110 to the scaffold, so that the inertial sensor units 110 can only be attached correctly aligned. There may also, or alternatively, be markings on the inertial sensor unit 110 to indicate how it should be mounted. The system 100 may also be arranged to automatically determine whether the inertial sensor units 110 are correctly mounted, based on gravity. If one or more inertial sensor units 110 are determined not to be correctly mounted, this information may be used either for alerting for incorrect mounting, or for calibrating the coordinate system based on the incorrect mounting.

Machine learning may also be used to evaluate the signals from the inertial sensor units 110. In this case, the exact mounting becomes less important. The system 100 may even be self-calibrating, using machine learning based on historical data received from the plurality of inertial sensor units 110. In this case, it is enough to collect signals from all the inertial sensor units 110 for a predetermined time when it is ascertained that no wall mounting 340 arrangement is loose, and then simply determine deviations from the normal operation.

It is also possible to create data for training a machine learning algorithm using a "reference scaffold". Measurement data can then be collected with all wall mounting arrangements 340 tightly secured, and with one more specific wall mounting arrangements 340 loose. Different types of motion may be used for creating the measurement data, including physical movement of people on the scaffold. In this way, the machine learning algorithm may learn to separate movement caused by the environment from movement caused by people walking on the scaffold. This may be used to detect intruders on the scaffold, possibly in combination with methods of identifying authorized personnel, such as e.g. RFID tags.

If the system includes a wind speed sensor 130, the signals received from the wind speed sensor 130 may also be used to determine whether a specific wall mounting arrangement 340 is loose. The signals received from the wind speed sensor 130 may e.g. be used to calibrate the system. It may be determined in advance to what extent the wind speed affects the acceleration measured by the inertial sensor units 110, and based on such a determination, the acceleration may be calibrated based on the measured wind speed. The calculation of threshold values may also be based on the measured wind speed.

If the at least one processing device 120 determines that a specific wall mounting arrangement 340 is loose, an alert may be sent to one or more persons responsible for the scaffold, preferably via communication with at least one user device 150. The signal receiving unit 200 may however also be arranged to alert users via alerting means arranged on the signal receiving unit 200, and/or on the inertial sensor unit 110 that is located substantially straight outside the wall mounting arrangement 340 that is loose.

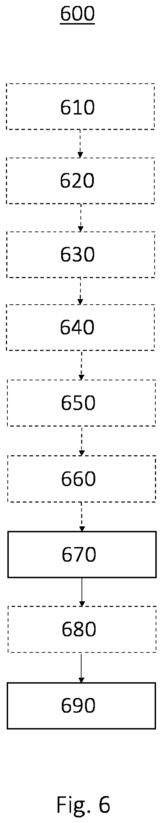

Fig. 6 schematically illustrates a method 600 for monitoring the safety of a scaffold 300. The method 600 may comprise:
Step 670: attaching each of a plurality of inertial sensor units 110 to the scaffold 300 substantially straight outside a wall mounting arrangement 340 of the scaffold 300, in a direction perpendicular to a wall to which the wall mounting arrangement 340 is anchored.
Step 690: determining, based at least on signals received from the inertial sensor unit 110 that is attached to the scaffold 300 substantially straight outside a specific wall mounting arrangement 340, whether said specific wall mounting arrangement 340 is loose.

This enables a determination of exactly which wall mounting arrangement 340 that is loose, using inertial sensor units 110 that may comprise no other sensors than accelerometers. However, the inertial sensor units 110 may also comprise further sensors, such as e.g. gyroscopes.

In embodiments, the attaching 670 comprises attaching each inertial sensor unit 110 to an inner vertical post 310 or an outer vertical post 320 the of the scaffold 300. This is a convenient way of attaching the inertial sensor units substantially straight outside the wall mounting arrangements of the scaffold.

In embodiments, the attaching 670 comprises, for each wall mounting arrangement 340 of the scaffold 300, attaching an inertial sensor unit 110 to the scaffold substantially straight outside said wall mounting arrangement 340. This facilitates the determination of exactly which specific wall mounting arrangement 340 that is loose.

In embodiments, the method 600 further comprises at least one of the following:
Step 610: arranging the inertial sensor units 110 to comprise accelerometers.
Step 620: arranging the inertial sensor units 110 to comprise alerting means 115, such as e.g. LED:s.
Step 630: arranging the signal receiving unit 200 to comprise alerting means 115, such as e.g. LED:s and/or audio emitters.
Step 640: arranging the signal receiving unit 200 to communicate with at least one user device 150. This enables the sending of alerts to one or more persons responsible for the scaffold 300.
Step 650: attaching at least one wind speed sensor 130 to the scaffold 300.
Step 660: arranging the signal receiving unit 200 to receive signals also from the at least one wind speed sensor 130. In this way, the determining 690 of whether a specific wall mounting arrangement 340 is loose may be based also on the signals received from said at least one wind speed sensor 130. This ensures that the signal analysis takes the wind excitation of the scaffold 300 into account.
Step 680: self-calibrating, using machine learning based on historical data received from the plurality of inertial sensor units 110. In this way, it may be automatically determined when there are deviations from the normal operation.

The foregoing disclosure is not intended to limit the present invention to the precise forms or particular fields of use disclosed. It is contemplated that various alternate embodiments and/or modifications to the present invention, whether explicitly described or implied herein, are possible in light of the disclosure. The system 100 may also be used for determining general movement of the scaffold, as an indication of something being out of the ordinary, even if it is not determined whether a specific wall mounting arrangement 340 is loose. Further, not all of the steps of the claims have to be carried out in the listed order. All technically meaningful orders of the steps are covered by the claims. Accordingly, the scope of the invention is defined only by the claims.

## Claims

1. System (100) for monitoring the safety of a scaffold (300), comprising:
a plurality of inertial sensor units (110), each inertial sensor unit (110) being adapted to be attached to the scaffold (300);
a signal receiving unit (200), arranged to receive signals wirelessly from the plurality of inertial sensor units (110); and
at least one processing device (120), arranged to determine general movement of the scaffold (300), as an indication of something being out of the ordinary, based at least on signals received from the inertial sensor units (110),
wherein each inertial sensor unit (110) comprises an accelerometer but not any gyroscope.

2. System (100) according to any one of the preceding claims, wherein, for each wall mounting arrangement (340) of the scaffold (300), an inertial sensor unit (110) is attached to the scaffold substantially straight outside said wall mounting arrangement (340).

3. System (100) according to any one of the preceding claims, wherein the inertial sensor units (110) comprise alerting means (115).

4. System (100) according to any one of the preceding claims, wherein the signal receiving unit (200) comprises alerting means (115).

5. System (100) according to any one of the preceding claims, wherein each inertial sensor unit (110) is arranged with fastening means (112) for fastening of the inertial sensor unit (110) to the scaffold (300), and the design of the fastening means (112) is adapted such that the inertial sensor unit (110) can only be attached correctly aligned with a coordinate system, such that it can be ensured that all inertial sensor units (110) are mounted so that they are aligned with the coordinate system.

6. System (100) according to any one of the preceding claims, wherein each inertial sensor unit (110) is adapted to be attached to an inner vertical post (310) or an outer vertical post (320) of the scaffold.

7. System (100) according to any one of the preceding claims, wherein each inertial sensor unit (110):
comprises alerting means (115),
is arranged with fastening means (112) for fastening of the inertial sensor unit (110) to the scaffold (300), wherein the design of the fastening means (112) is adapted such that the inertial sensor unit (110) can only be attached correctly aligned with a coordinate system, such that it can be ensured that all inertial sensor units (110) are mounted so that they are aligned with the coordinate system, and
is adapted to be attached to an inner vertical post (310) or an outer vertical post (320) of the scaffold (300).

8. System (100) according to any one of the preceding claims, each inertial sensor unit (110) being attached to the scaffold (300) substantially straight outside a wall mounting arrangement (340) of a plurality of wall mounting arrangements of the scaffold (300), which means that the inertial sensor unit (110) is attached to the scaffold (300) at substantially the horizontal level of the wall mounting arrangement (340), which covers locations just above or just below the horizontal level of the wall mounting arrangement (340), in a direction substantially perpendicular to a wall to which the wall mounting arrangement (340) is anchored, wherein the inertial sensor unit (110) is attached to the scaffold (300) much closer to one wall mounting arrangement (340) than to all other wall mounting arrangements, so that it is clear which wall mounting arrangement (340) the inertial sensor unit (110) is associated with; said at least one processing device (120) being arranged to determine whether a specific wall mounting arrangement (340) of the plurality of wall mounting arrangements is loose, based at least on signals received from the inertial sensor unit (110) that is attached to the scaffold (300) substantially straight outside said specific wall mounting arrangement (340).

9. System (100) according to claims 3 and 8, wherein, if the processing device (120) determines that a specific wall mounting arrangement (340) is loose, the signal receiving unit (200) is arranged to alert users via the alerting means arranged on the inertial sensor unit (110) that is located substantially straight outside the wall mounting arrangement (340) that is loose.

10. System (100) according to claim 8 or 9, wherein the at least one processing device (120) is arranged to determine whether the specific wall mounting arrangement (340) is loose based on a ratio between acceleration variability in a direction perpendicular to the wall and acceleration variability in an up/down direction, as measured by the inertial sensor unit (110) associated with the specific wall mounting arrangement (340), and based on whether the ratio increases beyond a predetermined threshold.

11. Scaffold (300) comprising the system (100) according to any one of the preceding claims.

12. Method for monitoring the safety of a scaffold (300) using the system (100) according to any one of claims 1 to 10, the method comprising: to automatically make a map of the location of the different inertial sensor units (110) either by varying the strength of the signal for the communication between the inertial sensor units (110) and the signal receiving unit (200) and using this signal variation to automatically make the map, or by using the time it takes for the signals to reach the signal receiving unit (200).
